# EUROPEAN PATENT APPLICATION

(11) **EP 4 207 372 A1**
(43) Date of publication of application: **05.07.2023**
(21) Application number: 21943313.3
(22) Date of filing: 11.11.2021
(51) Int. Cl.: H01M 4/36, H01M 4/66

(54) **SECONDARY BATTERY AND ELECTRIC DEVICE**

(71) Applicant: Contemporary Amperex Technology Co., Limited, Ningde City, Fujian 352100 (CN)
(72) Inventor: YOU, Xingyan, Ningde, Fujian 352100 (CN); WU, Yiyang, Ningde, Fujian 352100 (CN); WANG, Yuwen, Ningde, Fujian 352100 (CN); LIAO, Chan, Ningde, Fujian 352100 (CN); WU, Baozhen, Ningde, Fujian 352100 (CN)
(74) Representative: Behr, Wolfgang
(86) International application number: PCT/CN2021/130166
(87) International publication number: WO 2023/082157

(57) **Abstract**

This application provides a secondary battery and an electric apparatus. The secondary battery includes a negative electrode plate, and the negative electrode plate includes a negative electrode current collector, a first negative electrode material layer, and a second negative electrode material layer. The first negative electrode material layer is located between the negative electrode current collector and the second negative electrode material layer, the first negative electrode material layer includes a first negative electrode active material, and the second negative electrode material layer includes a second negative electrode active material. The first negative electrode active material includes artificial graphite A and artificial graphite B, the artificial graphite A includes secondary particles and an amorphous carbon coating layer is provided on a surface of the artificial graphite A, and the artificial graphite B includes primary particles and no amorphous carbon coating layer is provided on a surface of the artificial graphite B. This can improve rate performance of the secondary battery and make the secondary battery have longer service life.

## Description

### TECHNICAL FIELD

This application relates to the electrochemistry field, and in particular, to a secondary battery and an electric apparatus.

### BACKGROUND

Due to advantages such as high energy density, long cycle life, and zero memory effect, secondary batteries are widely used in wearable devices, smart phones, drones, electric vehicles, large energy storage devices, and other fields, and have been the most potential new green chemical power source. However, higher requirements are put forward for comprehensive performance of the secondary batteries, such as longer service life and good rate performance. Therefore, how to achieve both the longer service life and rate performance of the secondary batteries has become an issue to be urgently solved.

### SUMMARY

This application has been made in view of the foregoing issues, and an objective thereof is to increase storage life of secondary batteries and improve rate performance of the secondary batteries.

To achieve the foregoing objective, this application provides a secondary battery and an electric apparatus.

A first aspect of this application provides a secondary battery, including a negative electrode plate, where the negative electrode plate includes a negative electrode current collector, a first negative electrode material layer, and a second negative electrode material layer; and the first negative electrode material layer is located between the negative electrode current collector and the second negative electrode material layer, the first negative electrode material layer includes a first negative electrode active material, and the second negative electrode material layer includes a second negative electrode active material; where the first negative electrode active material includes artificial graphite A and artificial graphite B, the artificial graphite A includes secondary particles and an amorphous carbon coating layer is provided on a surface of the artificial graphite A, and the artificial graphite B includes primary particles and no amorphous carbon coating layer is provided on a surface of the artificial graphite B.

Therefore, in this application, the first negative electrode material layer and the second negative electrode material layer are disposed on the negative electrode current collector, and the first negative electrode active material in the first negative electrode material layer is controlled, so that the first negative electrode active material includes the artificial graphite A and the artificial graphite B. This can improve rate performance of the secondary battery and increase service life of the secondary battery.

In any embodiment, the first negative electrode active material satisfies at least one of the following conditions: (1) a median particle size by volume Dᵥ50 is 13 µm-18 µm, or optionally 15 µm-16 µm; (2) a particle size distribution satisfies: 1≤(Dᵥ90-Dᵥ10)/Dᵥ50≤1.6, or optionally 1.1≤(Dᵥ90-Dᵥ10)/Dᵥ50<1.5; (3) a degree of graphitization is 92.8%-94.8%, or optionally 93.5%-94.5%; (4) a specific surface area is 1.0 m²/g-1.6 m²/g, or optionally 1.05 m²/g-1.3 m²/g; and (5) a powder compacted density is 1.6 g/cm³-1.85 g/cm³, or optionally 1.7 g/cm³-1.8 g/cm³. The first negative electrode active material satisfies at least one of the preceding conditions, which helps to improve storage performance (for example, increase storage life) and rate performance of the secondary battery.

In any embodiment, the artificial graphite A satisfies at least one of the following conditions: (1) a median particle size by volume Dᵥ50 is 14 µm-20 µm, or optionally 16 µm-18 µm; (2) a particle size distribution satisfies: 0.8≤(Dᵥ90-Dᵥ10)/Dᵥ50≤1.7, or optionally 0.9≤(Dᵥ90-Dᵥ10)/Dᵥ50≤1.4; (3) a degree of graphitization is 91.0%-92.8%, or optionally 91.5%-92.5%; (4) a specific surface area is 0.8 m²/g-1.1 m²/g, or optionally 0.9 m²/g-1 m²/g; (5) a powder compacted density is 1.5 g/cm³-1.8 g/cm³, or optionally 1.6 g/cm³-1.8 g/cm³; (6) based on a mass of the first negative electrode active material, a mass percentage of the artificial graphite A is 10%-70%, or optionally 30%-50%; and (7) a mass ratio of the amorphous carbon coating layer in the artificial graphite A to the artificial graphite A is 1%-5%, or optionally 3%-4%. The artificial graphite A satisfies at least one of the preceding conditions, which helps to improve the rate performance of the secondary battery while ensuring the storage life of the secondary battery.

In any embodiment, the artificial graphite B satisfies at least one of the following conditions: (1) a median particle size by volume Dᵥ50 is 12 µm-16 µm, or optionally 15 µm-16 µm; and a particle size distribution satisfies 0.5≤(Dᵥ90-Dᵥ10)/Dᵥ50≤1.5, or optionally 0.7≤(Dᵥ90-Dᵥ10)/Dᵥ50≤1.1; (2) a degree of graphitization is 93.5%-95.5%, or optionally 94.0%-95.0%; (3) a specific surface area is 1.1 m²/g-1.6 m²/g, or optionally 1.3 m²/g-1.5 m²/g; (4) a powder compacted density is 1.6 g/cm³-1.85 g/cm³, or optionally 1.6 g/cm³-1.8 g/cm³; and (5) based on a mass of the first negative electrode active material, a mass percentage of the artificial graphite B is 30%-90%, or optionally 40%-70%. The artificial graphite B satisfies at least one of the preceding conditions, which helps to increase the storage life of the secondary battery while ensuring the rate performance of the secondary battery.

In any embodiment, the secondary battery satisfies at least one of the following conditions: (1) a median particle size by volume Dᵥ50 of the second negative electrode active material is less than or equal to a median particle size by volume Dᵥ50 of the first negative electrode active material; or optionally a ratio of the median particle size by volume Dᵥ50 of the second negative electrode active material to the median particle size by volume Dᵥ50 of the first negative electrode active material is 0.5-1; (2) a ratio of a particle size distribution (Dᵥ90-Dᵥ10)/Dᵥ50 of the second negative electrode active material to a particle size distribution (Dᵥ90-Dᵥ10)/Dᵥ50 of the first negative electrode active material is 0.8-1.1; (3) a degree of graphitization of the second negative electrode active material is lower than a degree of graphitization of the first negative electrode active material; or optionally a ratio of the degree of graphitization of the second negative electrode active material to the degree of graphitization of the first negative electrode active material is 0.95-0.99; (4) a specific surface area of the second negative electrode active material is less than a specific surface area of the first negative electrode active material; or optionally a ratio of the specific surface area of the second negative electrode active material to the specific surface area of the first negative electrode active material is 0.6 m²/g-0.8 m²/g; and (5) a powder compacted density of the second negative electrode active material is less than a powder compacted density of the first negative electrode active material; or optionally a ratio of the powder compacted density of the second negative electrode active material to the powder compacted density of the first negative electrode active material is 0.6-0.95. The secondary battery satisfies at least one of the preceding conditions, which helps to improve both the storage performance and rate performance of the secondary battery.

In any embodiment, the second negative electrode active material includes artificial graphite C, where the artificial graphite C includes secondary particles and an amorphous carbon coating layer is provided on a surface of the artificial graphite C; and a mass ratio of the amorphous carbon coating layer in the artificial graphite C to the artificial graphite C is 2%-8%, or optionally 4%-6%. The second negative electrode material layer includes the artificial graphite C, and amorphous carbon covered by the artificial graphite C is conducive to intercalation of lithium ions, improving the rate performance of the secondary battery. In addition, a synergistic effect of the first negative electrode material layer and the second negative electrode material layer can further improve the storage performance and rate performance of the secondary battery.

In any embodiment, the second negative electrode active material includes the artificial graphite C, and Dᵥ50 of the artificial graphite C is less than Dᵥ50 of the artificial graphite A; or optionally a ratio of Dᵥ50 of the artificial graphite C to Dᵥ50 of the artificial graphite A is 0.5-1. Controlling the ratio of Dᵥ50 of the artificial graphite C to Dᵥ50 of the artificial graphite A within the preceding range helps to improve both the rate performance and safety performance of the secondary battery.

In any embodiment, the secondary battery satisfies at least one of the following conditions: (1) a ratio of a degree of graphitization of the artificial graphite C to the degree of graphitization of the artificial graphite A is 0.95-1; (2) a ratio of a specific surface area of the artificial graphite C to the specific surface area of the artificial graphite A is 0.93-1; and (3) a ratio of the powder compacted density of the artificial graphite A to a powder compacted density of the artificial graphite C is 1.01-1.3. The secondary battery satisfies at least one of the preceding conditions, which helps to improve both the storage performance and rate performance of the secondary battery.

In any embodiment, a compacted density of the first negative electrode material layer is greater than a compacted density of the second negative electrode material layer; the compacted density of the first negative electrode material layer is 1.6 g/cm³-1.8 g/cm³, or optionally 1.6 g/cm³-1.75 g/cm³; and the compacted density of the second negative electrode material layer is 1.3 g/cm³-1.6 g/cm³, or optionally 1.4 g/cm³-1.6 g/cm³. Controlling the compacted densities of the first negative electrode material layer and the second negative electrode material layer within the preceding ranges helps to make full use of characteristics of high compacted density of the first negative electrode active material and high kinetic performance of the second negative electrode active material, so as to improve both the storage performance and rate performance of the secondary battery.

In any embodiment, a mass ratio of the first negative electrode material layer to the second negative electrode material layer is 2:3-3:2. Controlling the mass ratio of the first negative electrode material layer to the second negative electrode material layer within the preceding range helps to improve both the rate performance and storage performance of the secondary battery.

In any embodiment, the first negative electrode active material and the second negative electrode active material each include a silicon-based material, and based on the mass of the first negative electrode active material, a mass percentage of the silicon-based material is denoted as X; and based on a mass of the second negative electrode active material, a mass percentage of the silicon-based material is denoted as Y; and the secondary battery satisfies: X<Y; optionally, X≤5%; or optionally, Y≤10%. The introduction of the silicon-based material can increase gram capacities of the first negative electrode active material and the second negative electrode active material, thereby helping to increase energy density of the secondary battery. Controlling the mass percentages of silicon-based particles in the first negative electrode material layer and the second negative electrode material layer within the preceding ranges can further increase the energy density of the secondary battery while ensuring the rate performance of the secondary battery.

A second aspect of this application provides an electric apparatus, including the secondary battery according to the second aspect of this application.

Beneficial effects of this application are:
This application provides a secondary battery and an electric apparatus. The secondary battery includes a negative electrode plate, where the negative electrode plate includes a negative electrode current collector, a first negative electrode material layer, and a second negative electrode material layer; and the first negative electrode material layer is located between the negative electrode current collector and the second negative electrode material layer, the first negative electrode material layer includes a first negative electrode active material, and the second negative electrode material layer includes a second negative electrode active material. In this application, the first negative electrode material layer and the second negative electrode material layer are disposed on the negative electrode current collector, and the first negative electrode active material in the first negative electrode material layer is controlled, so that the first negative electrode active material includes artificial graphite A and artificial graphite B. This can increase energy density of the secondary battery, improve rate performance of the secondary battery, and make the secondary battery have longer service life. Certainly, when any product or method of this application is implemented, all advantages described above are not necessarily demonstrated simultaneously.

### BRIEF DESCRIPTION OF DRAWINGS

To describe the technical solutions in this application and the prior art more clearly, the following briefly describes the accompanying drawings required for describing the embodiments and the prior art. Apparently, the accompanying drawings in the following description show merely some embodiments of this application.
FIG. 1 is a schematic structural cross-sectional view of a negative electrode plate according to an embodiment of this application;
FIG. 2 is a schematic diagram of a secondary battery according to an embodiment of this application;
FIG. 3 is an exploded view of the secondary battery according to the embodiment of this application in FIG. 2;
FIG. 4 is a schematic diagram of a battery module according to an embodiment of this application;
FIG. 5 is a schematic diagram of a battery pack according to an embodiment of this application;
FIG. 6 is an exploded view of the battery pack according to the embodiment of this application in FIG. 5; and
FIG. 7 is a schematic diagram of an electric apparatus using a secondary battery as a power source according to an embodiment of this application.

### DESCRIPTION OF EMBODIMENTS

Embodiments that specifically disclose a negative electrode plate, a positive electrode plate, a secondary battery, a battery module, a battery pack, and an electric apparatus in this application are described in detail below with reference to the accompanying drawings as appropriate. However, unnecessary detailed descriptions may be omitted. For example, detailed descriptions of a well-known matter or overlapping descriptions of an actual identical structure has been omitted. This is to avoid unnecessary cumbersomeness of the following descriptions, to facilitate understanding by persons skilled in the art. In addition, the accompanying drawings and the following descriptions are provided for persons skilled in the art to fully understand this application and are not intended to limit the subject described in the claims.

"Ranges" disclosed in this application are defined in the form of lower and upper limits, given ranges are defined by selecting lower and upper limits, and the selected lower and upper limits define boundaries of special ranges. Ranges defined in the method may or may not include end values, and any combination may be used, that is, any lower limit may be combined with any upper limit to form a range. For example, if ranges of 60 to 120 and 80 to 110 are provided for a specific parameter, it should be understood that ranges of 60 to 110 and 80 to 120 are also expectable. In addition, if minimum values of a range are set to 1 and 2, and maximum values of the range are set to 3, 4, and 5, the following ranges are all expectable: 1 to 3, 1 to 4, 1 to 5, 2 to 3, 2 to 4, and 2 to 5. In this application, unless otherwise stated, a value range of "a to b" represents an abbreviated representation of any combination of real numbers between a and b, where both a and b are real numbers. For example, a value range of "0 to 5" means that all real numbers from "0 to 5" are listed herein, and "0-5" is just an abbreviated representation of a combination of these values. In addition, when a parameter is expressed as an integer greater than or equal to 2, this is equivalent to disclosure that the parameter is, for example, an integer: 2, 3, 4, 5, 6, 7, 8, 9, 10, 11, 12, or the like.

Unless otherwise specified, all the embodiments and optional embodiments of this application can be mutually combined to form a new technical solution.

Unless otherwise specified, all the technical features and optional technical features of this application can be mutually combined to form a new technical solution.

Unless otherwise specified, all the steps in this application can be performed sequentially or randomly, or optionally is performed sequentially. For example, a method including steps (a) and (b) indicates that the method may include steps (a) and (b) performed in sequence, or may include steps (b) and (a) performed in sequence. For example, that the method may further include step (c) indicates that step (c) may be added to the method in any order. For example, the method may include steps (a), (b), and (c), steps (a), (c), and (b), steps (c), (a), and (b), or the like.

Unless otherwise specified, "include" and "contain" mentioned in this application are inclusive or may be exclusive. For example, the terms "include" and "contain" can mean that other unlisted components may also be included or contained, or only listed components may be included or contained.

Unless otherwise specified, in this application, the term "or" is inclusive. For example, a phrase "A or B" means "A, B, or both A and B". More specifically, any one of the following conditions satisfies a condition "A or B": A is true (or exists) and B is false (or does not exist); A is false (or does not exist) and B is true (or exists); or both A and B are true (or exist).

In the course of research, the applicant found that while improving kinetic performance (for example, rate performance) of a secondary battery, side reactions of a surface coating often increased, which shortened storage life of the secondary battery or decreased cycling performance of the secondary battery, and therefore it was difficult to meet the requirements in practical applications. To improve both the storage performance and rate performance of the secondary battery and to improve comprehensive performance of the secondary battery, such as longer endurance mileage and longer service life, in view of this, this application provides a secondary battery and an electric apparatus.

It should be noted that, in the specific embodiments of this application, a lithium-ion battery is used as an example of a secondary battery to illustrate this application. However, the secondary battery in this application is not limited to the lithium-ion battery.

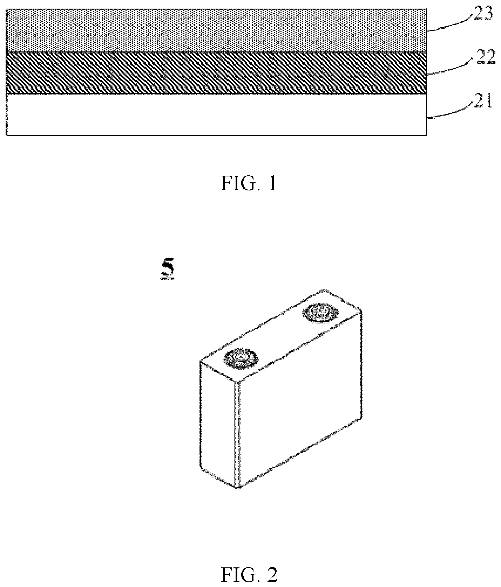

In an embodiment of this application, the application provides a secondary battery. The secondary battery includes a negative electrode plate. As shown in FIG. 1, the negative electrode plate includes a negative electrode current collector 21, a first negative electrode material layer 22, and a second negative electrode material layer 23. The first negative electrode material layer 22 is located between the negative electrode current collector 21 and the second negative electrode material layer 23, the first negative electrode material layer 22 includes a first negative electrode active material (not shown in the figure), and the second negative electrode material layer 23 includes a second negative electrode active material (not shown in the figure). The first negative electrode active material includes artificial graphite A and artificial graphite B, the artificial graphite A includes secondary particles and an amorphous carbon coating layer is provided on a surface of the artificial graphite A, and the artificial graphite B includes primary particles and no amorphous carbon coating layer is provided on a surface of the artificial graphite B.

In the course of research, the applicant found that the first negative electrode material layer and the second negative electrode material layer are disposed on the negative electrode current collector, and the first negative electrode active material in the first negative electrode material layer is controlled, so that the first negative electrode active material includes the artificial graphite A and the artificial graphite B. This can improve rate performance of the secondary battery and increase service life of the secondary battery.

Without being limited to any theory, the applicant found that providing the amorphous carbon coating layer on the surface of the artificial graphite A can increase intercalation sites of lithium ions, and a relatively large lattice spacing makes relatively fast lithium intercalation, which makes the artificial graphite A beneficial to improve the rate performance of the secondary battery; and the artificial graphite B has a regular graphite crystal structure, less structural defects, and high compacted density, which helps to increase energy density and life of the secondary battery. Therefore, under a synergistic effect of the artificial graphite A and the artificial graphite B, while the energy density is ensured, the rate performance of the secondary battery can be improved, and the service life can be increased.

In some embodiments, a median particle size by volume Dᵥ50 of the first negative electrode active material is 13 µm-18 µm, or optionally 15 µm-16 µm. The applicant found that when Dᵥ50 of the first negative electrode active material is too small (for example, less than 13 µm), the negative electrode active material is prone to side reactions with a liquid electrolyte, resulting in irreversible losses and decrease in compacted density of the first negative electrode material layer, thereby affecting the rate performance of the secondary battery; and when Dᵥ50 of the first negative electrode active material is too large (for example, greater than 18 µm), flatness of the first negative electrode material layer is easily affected, thereby affecting safety performance of the secondary battery. Controlling the value of Dᵥ50 of the first negative electrode active material within the preceding range helps to improve both the rate performance and the safety performance.

In some embodiments, a particle size distribution of the first negative electrode active material satisfies 1≤(Dᵥ90-Dᵥ10)/Dᵥ50≤1.6, or optionally 1.1≤(Dᵥ90-Dᵥ10)/Dᵥ50≤1.5. The applicant found that controlling the value of (Dᵥ90-Dᵥ10)/Dᵥ50 of the first negative electrode active material within the preceding range helps to improve both the rate performance and the safety performance. Dᵥ90 and Dᵥ10 of the first negative electrode active material are not particularly limited in this application, provided that the preceding size ranges are satisfied. For example, Dᵥ90 of the first negative electrode active material is 24 µm-28 µm, and Dᵥ10 of the first positive electrode active material is 5 µm-12 µm.

In some embodiments, a degree of graphitization of the first negative electrode active material is 92.8%-94.8%, or optionally 93.5%-94.5%. The applicant found that the degree of graphitization can reflect regularity of an internal structure of the material. When the degree of graphitization of the first negative electrode active material is too low (for example, lower than 92.8%), it indicates that the artificial graphite A in the negative electrode active material is highly carbonized and side reactions increase during use, thereby affecting the storage and cycle life of the secondary battery; and when the degree of graphitization of the first negative electrode active material is too high (for example, higher than 94.8%), the rate performance is deteriorated, difficulty in preparing the first negative electrode active material is increased, and production costs are also increased. Controlling the degree of graphitization of the first negative electrode active material within the preceding range helps to improve the storage performance and rate performance of the secondary battery and control its costs.

In some embodiments, a specific surface area of the first negative electrode active material is 1.0 m²/g-1.6 m²/g, or optionally 1.05 m²/g-1.3 m²/g. The applicant found that when the specific surface area of the first negative electrode active material is too small (for example, less than 1.0 m²/g), it is unbeneficial to deintercalation of lithium ions, thereby affecting the rate performance of the secondary battery; and when the specific surface area of the first negative electrode active material is too large (for example, greater than 1.6 m²/g), the first negative electrode active material is prone to side reactions with the liquid electrolyte, resulting in irreversible losses, thereby affecting the service life of the secondary battery. Controlling the specific surface area of the first negative electrode active material within the preceding range helps to increase the service life of the secondary battery and improve the rate performance of the secondary battery.

In some embodiments, a powder compacted density of the first negative electrode active material is 1.6 g/cm³-1.85 g/cm³, or optionally 1.7 g/cm³-1.8 g/cm³. The applicant found that when the powder compacted density of the first negative electrode active material is too small (for example, less than 1.6 g/cm³), the particles of the first negative electrode active material are not tightly packed, and during cycling of the secondary battery, the first negative electrode material layer is easily damaged, affecting the service life of the secondary battery; and when the powder compacted density of the first negative electrode active material is too large (for example, greater than 1.85 g/cm³), the particles of the first negative electrode active material are too tightly packed, affecting deintercalation of lithium ions, which in turn affects the rate performance of the secondary battery. Controlling the powder compacted density of the first negative electrode active material within the preceding range helps to improve the rate performance of the secondary battery and increase the service life of the secondary battery. In this application, the powder compacted density is a density of powder of a corresponding material after being processed under a pressure of 2T.

In some embodiments, a median particle size by volume Dᵥ50 of the artificial graphite A is 14 µm-20 µm, or optionally 16 µm-18 µm. The applicant found that controlling Dᵥ50 of the artificial graphite A within the preceding range helps to improve the rate performance and safety performance of the secondary battery.

In some embodiments, a particle size distribution of the artificial graphite A satisfies: 0.8≤(Dᵥ90-Dᵥ10)/Dᵥ50≤1.7, or optionally 0.9≤(Dᵥ90-Dᵥ10)/Dᵥ50≤1.4. The applicant found that controlling the value of (Dᵥ90-Dᵥ10)/Dᵥ50 of the artificial graphite A within the preceding range helps to improve the rate performance and safety performance of the secondary battery. Dᵥ90 and Dᵥ10 of the artificial graphite A are not particularly limited in this application, provided that the preceding particle size ranges are satisfied. For example, Dᵥ90 of the artificial graphite A is 25 µm-27 µm, and Dᵥ10 of the artificial graphite A is 7 µm-11 µm.

In some embodiments, a degree of graphitization of the artificial graphite A is 91.0%-92.8%, or optionally 91.5%-92.5%. The applicant found that by controlling the degree of graphitization of the artificial graphite A within the preceding range and lithium intercalation channels to be moderate, the service life of the secondary battery will not be rapidly shortened due to excessive surface defects, which helps to increase the service life of the secondary batter, improve the rate performance of the secondary battery, and control its costs.

In some embodiments, a specific surface area of the artificial graphite A is 0.8 m²/g-1.1 m²/g, or optionally 0.9m²/g-1 m²/g. The applicant found that controlling the specific surface area of the artificial graphite A within the preceding range and the side reactions on the surface of the artificial graphite A within a reasonable range helps to increase the service life of the secondary battery.

In some embodiments, a powder compacted density of the artificial graphite A is 1.5 g/cm³-1.8 g/cm³, or optionally 1.6 g/cm³-1.8 g/cm³. Without being limited to any theory, the applicant found that controlling the powder compacted density of the graphite A within the preceding range helps to increase the difference between compacted densities of the first negative electrode material layer and the second negative electrode material layer, and improve the rate performance, cycling performance, and storage performance of the secondary battery.

In some embodiments, a mass ratio of the amorphous carbon coating layer in the artificial graphite A to the artificial graphite A is 1%-5%, or optionally 3%-4%. The applicant found that by controlling the mass ratio of the amorphous carbon coating layer in the artificial graphite A to the artificial graphite A within the preceding range, active sites of the first negative electrode active material are increased, which helps to improve the rate performance of the secondary battery.

In some embodiments, based on a mass of the first negative electrode active material, a mass percentage of the artificial graphite A is 10%-70%, or optionally 30%-50%. The applicant found that when the mass percentage of the artificial graphite A is too low (for example, lower than 10%), the percentage of the artificial graphite B is too high, and lithium intercalation speed of the artificial graphite B is slow, which affects the rate performance of the secondary battery; and when the percentage of the artificial graphite A is too high (for example, higher than 70%), the percentage of the artificial graphite B decreases, the compacted density of the first negative electrode material layer decreases, surface defects increase, and side reactions increase accordingly, which affects storage life and cycling performance of the secondary battery. Controlling the mass percentage of the artificial graphite A within the preceding range helps to improve all the rate performance, cycling performance, and safety performance of the secondary battery.

In some embodiments, a median particle size by volume Dᵥ50 of the artificial graphite B is 12 µm-16 µm, or optionally 15 µm-16 µm; and a particle size distribution satisfies 0.5≤(Dᵥ90-Dᵥ10)/Dᵥ50≤1.5, or optionally 0.7≤(Dᵥ90-Dᵥ10)/Dᵥ50≤1.1. The applicant found that controlling the values of Dᵥ50 and (Dᵥ90-Dᵥ10)/Dᵥ50 of the artificial graphite B within the preceding ranges helps to improve the storage performance and safety performance of the secondary battery. Dᵥ90 and Dᵥ10 of the artificial graphite B are not particularly limited in this application, provided that the preceding particle size ranges are satisfied. For example, Dᵥ90 of the artificial graphite B is 25 µm-30 µm, and Dᵥ10 of the artificial graphite A is 5 µm-10 µm.

In some embodiments, a degree of graphitization of the artificial graphite B is 93.5%-95.5%, or optionally 94.0%-95.0%. The applicant found that by controlling the degree of graphitization of the artificial graphite B within the preceding range, surface impurity carbon is less, which helps to increase the energy density of the secondary battery and control its costs while ensuring the rate performance of the secondary battery.

In some embodiments, a specific surface area of the artificial graphite B is 1.1 m²/g-1.6 m²/g, or optionally 1.3 m²/g-1.5 m²/g. The applicant found that controlling the specific surface area of the artificial graphite B within the preceding range helps to improve the storage performance of the secondary battery.

In some embodiments, a powder compacted density of the artificial graphite B is 1.6 g/cm³-1.85 g/cm³, or optionally 1.6 g/cm³-1.8 g/cm³. The applicant found that controlling the powder compacted density of the artificial graphite B within the preceding range helps to improve the storage performance of the secondary battery.

In some embodiments, based on a mass of the first negative electrode active material, a mass percentage of the artificial graphite B is 30%-90%, or optionally 40%-70%. The applicant found that when the mass percentage of the artificial graphite B is too low (for example, lower than 30%), the percentage of the artificial graphite A is too high, and the compacted density of the first negative electrode material layer is decreased, which affects the rate performance of the secondary battery; and when the percentage of the artificial graphite B is too high (for example, higher than 90%), the percentage of the artificial graphite A decreases, which affects the rate performance of the secondary battery. Controlling the mass percentage of the artificial graphite B within the preceding range helps to improve both the rate performance and storage performance of the secondary battery.

In some embodiments, in the secondary battery, a median particle size by volume Dᵥ50 of the second negative electrode active material is less than or equal to the median particle size by volume Dᵥ50 of the first negative electrode active material, which can control compacted densities of the first negative electrode material layer and the second negative electrode material layer, making the compacted densities to be differentiated, meaning that the compacted density of the first negative electrode material layer is greater than that of the second material layer, which helps to improve infiltration of the liquid electrolyte to the first negative electrode material layer. Optionally, a ratio of the median particle size by volume Dᵥ50 of the second negative electrode active material to the median particle size by volume Dᵥ50 of the first negative electrode active material is 0.5-1. The applicant found that controlling the ratio of the median particle size by volume Dᵥ50 of the second negative electrode active material to be less than or equal to the median particle size by volume Dᵥ50 of the first negative electrode active material within the preceding range helps to ensure differentiation between compacted densities of the first negative electrode material layer and the second negative electrode material layer while improving the rate performance and safety performance of the secondary battery. For example, Dᵥ50 of the second negative electrode active material may be 6.5 µm-18 µm.

In some embodiments, in the secondary battery, a ratio of a particle size distribution (Dᵥ90-Dᵥ10)/Dᵥ50 of the second negative electrode active material to a particle size distribution (Dᵥ90-Dᵥ10)/Dᵥ50 of the first negative electrode active material is 0.8-1.1. The applicant found that controlling the ratio of the particle size distribution (Dᵥ90-Dᵥ10)/Dᵥ50 of the second negative electrode active material to the particle size distribution (Dᵥ90-Dᵥ10)/Dᵥ50 of the first negative electrode active material within the preceding range helps to improve both the rate performance and safety performance of the secondary battery.

In some embodiments, in the secondary battery, the degree of graphitization of the second negative electrode active material is lower than the degree of graphitization of the first negative electrode active material, so that the kinetic advantage of the second negative electrode active material can be fully utilized. Optionally, a ratio of the degree of graphitization of the second negative electrode active material to the degree of graphitization of the first negative electrode active material is 0.95-0.99. The applicant found that controlling the ratio of the degree of graphitization of the second negative electrode active material to the degree of graphitization of the first negative electrode active material within the preceding range helps to improve the rate performance of the secondary battery and control its costs. For example, the degree of graphitization of the second negative electrode active material may be 90%-92.12%.

In some embodiments, in the secondary battery, the specific surface area of the second negative electrode active material is less than the specific surface area of the first negative electrode active material, so that an overall exposed area of the negative electrode plate can be appropriately controlled. Optionally, a ratio of the specific surface area of the second negative electrode active material to the specific surface area of the first negative electrode active material is 0.6-0.8. The applicant found that controlling the ratio of the specific surface area of the second negative electrode active material to the specific surface area of the first negative electrode active material within the preceding range helps to increase the service life of the secondary battery and improve the rate performance of the secondary battery. For example, the specific surface area of the second negative electrode active material may be 0.7 m²/g-1 m²/g.

In some embodiments, in the secondary battery, the powder compacted density of the second negative electrode active material is less than the powder compacted density of the first negative electrode active material, which can increase the difference between the compacted densities of the first negative electrode material layer and the second negative electrode material layer, and is beneficial for the liquid electrolyte to pass through the low-compacted-density second negative electrode active material more smoothly to reach the first negative electrode material layer, so as to exert the excellent kinetic performance of the first negative electrode active material. Optionally, a ratio of the powder compacted density of the second negative electrode active material to the powder compacted density of the first negative electrode active material is 0.6-0.95. The applicant found that controlling the ratio of the powder compacted density of the second negative electrode active material to the powder compacted density of the first negative electrode active material within the preceding range helps to improve the rate performance, cycling performance, and storage performance of the secondary battery. For example, a powder tap density of the second negative electrode active material may be 1.3 g/cm³-1.65 g/cm³.

In some embodiments, the second negative electrode active material includes artificial graphite C, where the artificial graphite C includes secondary particles and an amorphous carbon coating layer is provided on a surface of the artificial graphite C; and a mass ratio of the amorphous carbon coating layer in the artificial graphite C to the artificial graphite C is 2%-8%, or optionally 4%-6%. The inclusion of the artificial graphite C in the second negative electrode material layer is beneficial to improve the rate performance of the secondary battery, so that under a synergistic effect of the first negative electrode material layer and the second negative electrode material layer, the storage performance and rate performance of the secondary battery can be further improved. The applicant found that controlling the mass ratio of the amorphous carbon coating layer in the artificial graphite C to the artificial graphite C within the preceding range helps to improve the rate performance of the secondary battery.

In some embodiments, the second negative electrode active material includes artificial graphite C, and Dᵥ50 of the artificial graphite C is less than Dᵥ50 of the artificial graphite A, which can make the compacted density of the second negative electrode material layer to be less than the compacted density of the first negative electrode material layer. Optionally, a ratio of Dᵥ50 of the artificial graphite C to Dᵥ50 of the artificial graphite A is 0.5-1. The applicant found that controlling the ratio of Dᵥ50 of the artificial graphite C to Dᵥ50 of the artificial graphite A within the preceding range helps to improve both the rate performance and safety performance of the secondary battery. For example, Dv50 of the artificial graphite C may be 7 µm-13 µm.

In some embodiments, in the secondary battery, a ratio of a degree of graphitization of the artificial graphite C to the degree of graphitization of the artificial graphite A is 0.95-1. The applicant found that controlling the ratio of the degree of graphitization of the artificial graphite C to the degree of graphitization of the artificial graphite A within the preceding range helps to improve the storage performance and rate performance of the secondary battery and control its costs. For example, the degree of graphitization of the artificial graphite C may be 91%-92%.

In some embodiments, in the secondary battery, a ratio of a specific surface area of the artificial graphite C to the specific surface area of the artificial graphite A is 0.93-1. The applicant found that controlling the ratio of the specific surface area of the artificial graphite C to the specific surface area of the artificial graphite A within the preceding range helps to improve the rate performance of the secondary battery. For example, the specific surface area of the artificial graphite C may be 0.7 m²/g-1.1 m²/g.

In some embodiments, in the secondary battery, a ratio of the powder compacted density of the artificial graphite A to a powder compacted density of the artificial graphite C is 1.01-1.3. The applicant found that controlling the ratio of the powder compacted density of the artificial graphite A to the powder compacted density of the artificial graphite C within the preceding range helps to improve the rate performance, cycling performance, and storage performance of the secondary battery. For example, the powder compacted density of the artificial graphite C may be 1.3 g/cm³-1.6 g/cm³.

In some embodiments, the compacted density of the first negative electrode material layer is greater than the compacted density of the second negative electrode material layer, so that the liquid electrolyte can fully infiltrate the first negative electrode material layer and the second negative electrode material layer, and give full play to performance of the first negative electrode material layer and the second negative electrode material layer, so as to improve rate performance of an electrochemical apparatus and increase energy density of the electrochemical apparatus. A compacted density of the first negative electrode material layer is 1.6 g/cm³-1.8 g/cm³, or optionally 1.6 g/cm³-1.75 g/cm³; and a compacted density of the second negative electrode material layer is 1.3 g/cm³-1.6 g/cm³, or optionally 1.4 g/cm³-1.6 g/cm³. The applicant found that controlling the compacted densities of the first negative electrode material layer and the second negative electrode material layer within the preceding ranges helps to increase the energy density of the secondary battery and improve the rate performance of the secondary battery.

In some embodiments, a mass ratio of the first negative electrode material layer to the second negative electrode material layer is 2:3-3:2. The applicant found that when the mass ratio of the first negative electrode material layer to the second negative electrode material layer is too small (for example, less than 2:3), in other words, a mass of the first negative electrode material layer is relatively small and a mass of the second negative electrode material layer is relatively large, the storage life of the secondary battery is affected; and when the mass ratio of the first negative electrode material layer to the second negative electrode material layer is too large (for example, greater than 3:2), in other words, the mass of the first negative electrode material layer is relatively large and the mass of the second negative electrode material layer is relatively small, the rate performance of the secondary battery is affected. Controlling the mass ratio of the first negative electrode material layer to the second negative electrode material layer within the preceding range helps to improve the rate performance of the secondary battery and increase the energy density of the secondary battery.

In some embodiments, the first negative electrode active material and the second negative electrode active material each include a silicon-based material, and based on the mass of the first negative electrode active material, a mass percentage of the silicon-based material is denoted as X; and based on a mass of the second negative electrode active material, a mass percentage of the silicon-based material is denoted as Y; and the secondary battery satisfies: X<Y; optionally, X≤5%; optionally, Y≤10%; or optionally, X≤2% and Y≤6%. The introduction of the silicon-based material increases extractable gram capacity of the first negative electrode active material or the second negative electrode active material, thereby increasing the energy density of the secondary battery. Controlling the mass percentages of silicon-based particles in the first negative electrode material layer and the second negative electrode material layer within the preceding ranges can further increase the energy density of the secondary battery while ensuring the rate performance of the secondary battery.

In some embodiments, the first negative electrode active material may further include artificial graphite.

The preparation methods of the artificial graphite A and the artificial graphite C are not particularly limited in this application, provided that the objective of this application can be achieved. For example, the preparation methods may include, but are not limited to, the following steps: first pretreating a coke raw material to remove impurities, obtaining secondary particles through pyrolysis and granulation, performing graphitization treatment, applying pitch on the surface of the secondary particles after screening test, performing high temperature carbonization, and obtaining artificial graphite A or artificial graphite C. The particle size of the secondary particles is not particularly limited in this application, provided that the objective of this application can be achieved, for example, a median particle size by volume Dᵥ50 of the secondary particles is 10 µm-20 µm. The temperature and time of the graphitization treatment are not particularly limited in this application, provided that the objective of this application can be achieved. For example, the temperature of graphitization treatment is 2400°C-3000°C, and the time of graphitization treatment is 20 h-30 h. The temperature and time of the high temperature carbonization are not particularly limited in this application, provided that the objective of this application can be achieved. For example, the temperature of high temperature carbonization is 700°C-1500°C, and the time of high temperature carbonization is 7 h-15 h.

The preparation method of the artificial graphite B is not particularly limited in this application, provided that the objective of this application can be achieved. For example, the preparation method may include, but is not limited to, the following steps: first pretreating a coke raw material to remove impurities, obtaining primary particles through pyrolysis and granulation, performing graphitization treatment, performing screening test, and obtaining artificial graphite B. The particle size of the primary particles is not particularly limited in this application, provided that the objective of this application can be achieved, for example, a median particle size by volume Dᵥ50 of the primary particles is 12 µm-16 µm. The temperature and time of the graphitization treatment are not particularly limited in this application, provided that the objective of this application can be achieved. For example, the temperature of graphitization treatment is 2400°C-3000°C, and the time of graphitization treatment is 18 h-30 h.

In this application, a structure (for example, a core and a coating layer) of the artificial graphite A or the artificial graphite C can be tested by using a device and method well known in the art. In an example, the following steps may be performed: selecting a microgrid with a specific diameter (for example, 3 mm in diameter), holding an edge of the microgrid with a pointed tweezer, placing a membrane surface of the microgrid upward (to observe a shiny side, namely the membrane surface, under light), and gently placing it flat on white filter paper; adding an appropriate amount of graphite particle sample (for example, 1 g) to a beaker containing an appropriate amount of ethanol, and performing ultrasonic vibration for 10 min-30 min; sucking such to-be-tested sample with a glass capillary and adding 2-3 drops of the to-be-tested sample on the microgrid; and after baking in an oven for 5 min, placing the microgrid with the to-be-tested sample on a sample stage, and conducting testing at a specific magnification (for example, 60,000 times) by using a transmission electron microscope (for example, Hitachi HF-3300S Cs-corrected STEM), so as to obtain a transmission electron microscope (TEM) image of the to-be-tested sample. A core structure and a coating layer structure can be observed in the TEM image.

Dᵥ10, Dᵥ50, and Dᵥ90 in this application are parameters well known in the art, and can be determined by using a laser particle size analyzer (for example, Malvern Master Size 3000) with reference to China National Standard GB/T 19077-2016 ("Particle Size Distribution Laser Diffraction Method"). Dᵥ10 refers to a particle size corresponding to a cumulative volume distribution percentage of a measured material reaching 10%; Dᵥ50 refers to a particle size corresponding to a cumulative volume distribution percentage of a measured material reaching 50%; and Dᵥ90 refers to a particle size corresponding to a cumulative volume distribution percentage of a measured material reaching 90%.

The degree of graphitization in this application has a meaning well known in the art, and may be measured by using a method known in the art. For example, an X-ray diffractometer (for example, Bruker D8 Discover) may be used. For the test method, refers to standards JIS K 0131-1996 ("General Rules for Measurement and Analysis of X-ray Diffractometers"), JB/T 4220-2011 ("Determination Method of Artificial Graphite Lattice Parameter"), and GB/T 24533-2019 ("Graphite Negative Electrode Materials for Lithium-ion Batteries"). Specifically, the d002 size of the material is first measured, and the degree of graphitization (G)=(0.344-d002)/(0.344-0.3354)×100% is then calculated according to the formula to obtain the degree of graphitization of the measured material, where d002 refers to an interlayer spacing in the graphite crystal structure, and is measured in nm. In the X-ray diffraction analysis test, a copper target may be used as an anode target, a CuKα ray is used as a radiation source, a ray wavelength λ=1.5418 Å, a scanning angle 2θ is 20°-80°, and a scanning rate may be 4°/min.

The specific surface area in this application has a meaning well known in the art, and may be measured by using a method known in the art. For example, the specific surface area can be measured according to China National Standard GB/T 19587-2017 ("Determination of the Specific Surface Area of Solids by Gas Adsorption Using the BET Method") by using the nitrogen adsorption specific surface area analysis test method and calculated by using the BET (Brunauer Emmett Teller) method. The nitrogen adsorption specific surface area analysis test may be carried out by using the Tri-Star 3020 specific surface area and pore size analyzer from Micromeritics company in USA.

The powder compacted density in this application has a meaning well known in the art, and may be measured by using a method known in the art. For example, the powder compacted density may be measured by using an electronic pressure testing machine (for example, UTM7305) with reference to China National Standard GB/T 24533-2009 ("Graphite Negative Electrode Materials for Lithium-ion Batteries"): placing a to-be-tested powder sample with a mass of M on a special mold (with a bottom area S) for compaction, setting different pressures (2T may be used in this application), holding the pressure for 30s, releasing the pressure, waiting for 10s, reading the thickness H of the powder on the machine after compaction under such pressure, and calculating the powder compacted density under the pressure. The powder compacted density=M/(H×S).

In addition, the following describes a secondary battery and an electric apparatus in this application, and a battery module and a battery pack including the secondary battery in this application with appropriate reference to the accompanying drawings.

Normally, the secondary battery includes a positive electrode plate, a negative electrode plate, an electrolyte, and a separator. In a battery charging/discharging process, active ions are intercalated and deintercalated back and forth between the positive electrode plate and the negative electrode plate. The electrolyte conducts ions between the positive electrode plate and the negative electrode plate. The separator is disposed between the positive electrode plate and the negative electrode plate to mainly prevent a short circuit between positive and negative electrodes and to allow the ions to pass through.

### [Positive electrode plate]

The positive electrode plate includes a positive electrode current collector and a positive electrode film layer disposed on at least one surface of the positive electrode current collector. In an example, the positive electrode current collector includes two back-to-back surfaces in a thickness direction thereof, and the positive electrode film layer is disposed on either or both of the two back-to-back surfaces of the positive electrode current collector.

In some embodiments, the positive electrode current collector may be a metal foil or a composite current collector. For example, as the metal foil, an aluminum foil may be used. The composite current collector may include a polymer material matrix and a metal layer formed on at least one surface of the polymer material matrix. The composite current collector may be formed by forming a metal material (aluminum, aluminum alloy, nickel, nickel alloy, titanium, titanium alloy, silver, silver alloy, or the like) on a polymer material matrix (for example, matrices of polypropylene (PP), polyethylene terephthalate (PET), polybutylene terephthalate (PBT), polystyrene (PS), and polyethylene (PE)).

In some embodiments, the positive electrode active material may be a positive electrode active material for batteries well known in the art. In an example, the positive electrode active material may include at least one of the following materials: olivine-structured lithium-containing phosphate, lithium transition metal oxide, and respective modified compounds thereof. However, this application is not limited to these materials, and may also use other conventional materials that can be used as the positive electrode active material of the battery. One of these positive electrode active materials may be used alone, or two or more of them may be used in combination. An example of the lithium transition metal oxide may include but is not limited to at least one of lithium cobalt oxide (for example, LiCoO₂), lithium nickel oxide (for example, LiNiO₂), lithium manganese oxide (for example, LiMnO₂ and LiMn₂O₄), lithium nickel cobalt oxide, lithium manganese cobalt oxide, lithium nickel manganese oxide, lithium nickel cobalt manganese oxide (for example, LiNi_{1/3}Co_{1/3}Mn_{1/3}O₂ (NCM₃₃₃ for short), LiNi_{0.5}Co_{0.2}Mn_{0.3}O₂ (NCM₅₂₃ for short), LiNi_{0.5}Co_{0.25}Mn_{0.25}O₂ (NCM₂₁₁ for short), LiNi_{0.6}Co_{0.2}Mn_{0.2}O₂ (NCM₆₂₂ for short), and LiNi_{0.8}Co_{0.1}Mn_{0.1}O₂ (NCM₈₁₁ for short)), lithium nickel cobalt aluminum oxide (for example, LiNi_{0.85}Co_{0.15}Al_{0.05}O₂), and modified compounds thereof. An example of the olivine-structured lithium-containing phosphate may include but is not limited to at least one of lithium iron phosphate (for example, LiFePO₄ (LFP for short)), a composite material of lithium iron phosphate and carbon, lithium manganese phosphate (for example, LiMnPO₄), a composite material of lithium manganese phosphate and carbon, lithium manganese iron phosphate, and a composite material of lithium manganese iron phosphate and carbon.

In some embodiments, the positive electrode film layer further optionally includes a binder. In an example, the binder may include at least one of polyvinylidene fluoride (PVDF), polytetrafluoroethylene (PTFE), vinylidene fluoridetetrafluoroethylene-propylene terpolymer, vinylidene fluoride-hexafluoropropylenetetrafluoroethylene terpolymer, tetrafluoroethylene-hexafluoropropylene copolymer, and fluorine-containing acrylic resin.

In some embodiments, the positive electrode film layer further optionally includes a conductive agent. In an example, the conductive agent may include at least one of superconducting carbon, acetylene black, carbon black, Ketjen black, carbon dots, carbon nanotubes, graphene, and carbon nanofiber.

In some embodiments, the positive electrode plate may be prepared by using the following manners: the constituents used for preparing the positive electrode plate, for example, the positive electrode active material, the conductive agent, the binder, and any other constituent, are dissolved in a solvent (for example, N-methylpyrrolidone) to form a positive electrode slurry; the positive electrode slurry is applied onto the positive electrode current collector, and processes such as drying and cold pressing are performed to obtain the positive electrode plate.

### [Negative electrode plate]

In an example, the negative electrode current collector has two back-to-back surfaces in a thickness direction thereof, and the first negative electrode material layer and the second negative electrode material layer are disposed on either or both of the two back-to-back surfaces of the negative electrode current collector.

In some embodiments, the negative electrode current collector of the negative electrode plate may be a metal foil or a composite current collector. For example, a copper foil may be used as the metal foil. The composite current collector may include a polymer material matrix and a metal layer formed on at least one surface of the polymer material matrix. The composite current collector may be formed by forming a metal material (copper, copper alloy, nickel, nickel alloy, titanium, titanium alloy, silver, silver alloy, or the like) on a polymer material matrix (for example, matrices of polypropylene (PP), polyethylene terephthalate (PET), polybutylene terephthalate (PBT), polystyrene (PS), and polyethylene (PE)).

In some embodiments, the first negative electrode material layer and the second negative electrode material layer each further optionally include a binder. The binder may be selected from at least one of styrene-butadiene rubber (SBR), polyacrylic acid (PAA), polyacrylic acid sodium (PAAS), polyacrylamide (PAM), polyvinyl alcohol (PVA), sodium alginate (SA), polymethacrylic acid (PMAA), and carboxymethyl chitosan (CMCS).

In some embodiments, the first negative electrode material layer and the second negative electrode material layer each further optionally include a conductive agent. The conductive agent may be selected from at least one of superconducting carbon, acetylene black, carbon black, Ketjen black, carbon dots, carbon nanotubes, graphene, and carbon nanofiber.

In some embodiments, the first negative electrode material layer and the second negative electrode material layer each further optionally include other additives, such as a thickener (for example, sodium carboxymethyl cellulose (CMC-Na)).

In some embodiments, the negative electrode plate may be prepared by using the following manners: the constituents used for preparing the negative electrode plate, for example, the first negative electrode active material, the conductive agent, the binder, and any other constituent, are dissolved in a solvent (for example, deionized water) to form a first negative electrode slurry; the second negative electrode active material, the conductive agent, the binder, and any other constituent are dissolved in a solvent (for example, deionized water) to form a second negative electrode slurry; the first negative electrode slurry is applied onto the negative electrode current collector, and the negative electrode current collector containing the first negative electrode material layer is obtained after drying; then the second negative electrode slurry is applied onto the first negative electrode material layer, and processes such as drying and cold pressing are performed to obtain the negative electrode plate.

### [Electrolyte]

The electrolyte conducts ions between the positive electrode plate and the negative electrode plate. The electrolyte is not limited to any specific type in this application, and may be selected as required. For example, the electrolyte may be in a liquid state, a gel state, or an all-solid state.

In some embodiments, the electrolyte is a liquid electrolyte. The liquid electrolyte includes an electrolyte salt and a solvent.

In some embodiments, the electrolyte salt may be selected from at least one of lithium hexafluorophosphate, lithium tetrafluoroborate, lithium perchlorate, lithium hexafluoroborate, lithium bisfluorosulfonyl imide, lithium bis-trifluoromethanesulfon imide, lithium trifluoromethanesulfonat, lithium difluorophosphate, lithium difluorooxalatoborate, lithium bisoxalatoborate, lithium difluorobisoxalate phosphate, and lithium tetrafluoro oxalate phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, methyl sulfonyl methane, ethyl methanesulfonate, and diethyl sulfone.

In some embodiments, the liquid electrolyte further optionally includes an additive. For example, the additive may include a negative electrode film-forming additive or a positive electrode film-forming additive, or may include an additive capable of improving some performance of the battery, for example, an additive for improving overcharge performance of the battery, or an additive for improving hightemperature or low-temperature performance of the battery.

### [Separator]

In some embodiments, the secondary battery further includes a separator. The separator is not limited to any specific type in this application, and may be any commonly known porous separator with good chemical stability and mechanical stability.

In some embodiments, a material of the separator may be selected from at least one of glass fiber, non-woven fabric, polyethylene, polypropylene, and polyvinylidene fluoride. The separator may be a single-layer thin film or a multi-layer composite thin film, and is not particularly limited. When the separator is a multi-layer composite thin film, all layers may be made of same or different materials, which is not particularly limited.

In some embodiments, the positive electrode plate, the negative electrode plate, and the separator may be made into an electrode assembly through winding or lamination.

In some embodiments, the secondary battery may include an outer package. The outer package is used for packaging the electrode assembly and the electrolyte.

In some embodiments, the outer package of the secondary battery may be a hard shell, for example, a hard plastic shell, an aluminum shell, or a steel shell. The outer package of the secondary battery may alternatively be a soft pack, for example, a soft pouch. A material of the soft pouch may be plastic. As the plastic, polypropylene, polybutylene terephthalate, polybutylene succinate, and the like may be listed.

This application does not impose special limitations on a shape of the secondary battery, and the secondary battery may be cylindrical, rectangular, or of any other shapes. For example, FIG. 2 shows a secondary battery 5 of a rectangular structure as an example.

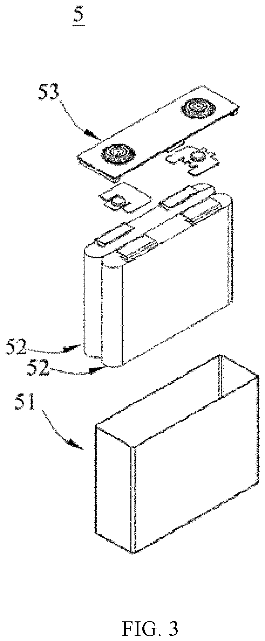

In some embodiments, referring to FIG. 3, the outer package may include a housing 51 and a cover plate 53. The housing 51 may include a base plate and a side plate connected onto the base plate, and the base plate and the side plate enclose an accommodating cavity. The housing 51 has an opening communicating with the accommodating cavity, and the cover plate 53 can cover the opening to close the accommodating cavity. A positive electrode plate, a negative electrode plate, and a separator form an electrode assembly 52 through winding or lamination. The electrode assembly 52 is packaged in the accommodating cavity. The liquid electrolyte is infiltrated into the electrode assembly 52. There may be one or more electrode assemblies 52 in the secondary battery 5, and persons skilled in the art may make choices according to actual requirements.

In some embodiments, secondary batteries may be assembled into a battery module, and the battery module may include one or more secondary batteries. A specific quantity may be chosen by persons skilled in the art based on use and capacity of the battery module.

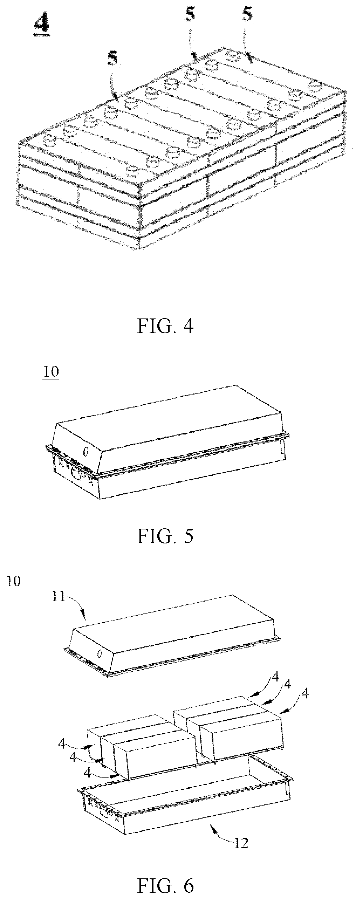

FIG. 4 shows a battery module 4 as an example. Referring to FIG. 4, in the battery module 4, a plurality of secondary batteries 5 may be sequentially arranged along a length direction of the battery module 4. Certainly, the secondary batteries may alternatively be arranged in any other manner. Further, the plurality of secondary batteries 5 may be fastened through fasteners.

Optionally, the battery module 4 may further include a housing with an accommodating space, and the plurality of secondary batteries 5 are accommodated in the accommodating space.

In some embodiments, the battery modules may be further assembled into a battery pack, and the battery pack may include one or more battery modules. A specific quantity may be chosen by persons skilled in the art based on use and capacity of the battery pack.

FIG. 5 and FIG. 6 show a battery pack 10 as an example. Referring to FIG. 5 and FIG. 6, the battery pack 10 may include a battery box and a plurality of battery modules 4 arranged in the battery box. The battery box includes an upper box body 11 and a lower box body 12. The upper box body 11 can cover the lower box body 12 to form an enclosed space for accommodating the battery modules 4. The plurality of battery modules 4 may be arranged in the battery box in any manner.

In addition, this application further provides an electric apparatus. The electric apparatus includes at least one of the secondary battery, the battery module, or the battery pack provided in this application. The secondary battery, the battery module, or the battery pack may be used as a power source for the electric apparatus, or an energy storage unit of the electric apparatus. The electric apparatus may include a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite system, an energy storage system, and the like, but is not limited thereto.

The secondary battery, the battery module, or the battery pack may be selected for the electric apparatus based on requirements for using the electric apparatus.

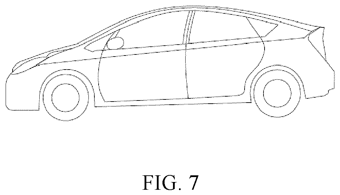

FIG. 7 shows an electric apparatus as an example. The electric apparatus is a battery electric vehicle, a hybrid electric vehicle, a plug-in hybrid electric vehicle, or the like. To satisfy a requirement of the electric apparatus for high power and high energy density of the secondary battery, a battery pack or a battery module may be used.

In another example, the apparatus may be a mobile phone, a tablet computer, a notebook computer, or the like. Such apparatus is generally required to be light and thin and may use a secondary battery as its power source.

### Examples

The following describes examples in this application. The examples described below are exemplary and only used to explain this application, but cannot be understood as a limitation on this application. Examples whose technical solutions or conditions are not specified are made based on technical solutions or conditions described in documents in the art, or made based on the product specification. The reagents or instruments used are all conventional products that can be purchased on the market if no manufacturer is indicated.

### Example 1-1

### <Preparation of positive electrode plate>

The positive active material LiNi_{0.8}Co_{0.1}Mn_{0.1}O₂, the conductive agent conductive carbon black, and the binder polyvinylidene fluoride (PVDF) were mixed at a mass ratio of 98:1:1, to which a solvent N-methylpyrrolidone (NMP) was added, the resulting solution was stirred by using a vacuum mixer until the system was uniform, and a positive electrode slurry with a solid percentage of 75wt% was obtained. The positive electrode slurry was uniformly applied on a surface of an aluminum foil with a thickness of 13 µm, and the aluminum foil was dried at 90°C and cold-pressed to obtain a positive electrode plate coated with a positive electrode active material layer with a thickness of 114 µm, which was then subjected to processes such as tab forming and cutting to obtain a positive electrode plate.

### <Preparation of negative electrode active material>

Artificial graphite A: The coke raw material was first pretreated to remove impurities, pyrolysis and granulation were performed to obtain secondary particles with Dᵥ50 of 15 µm, and the secondary particles were subjected to graphitization treatment at 3000°C for 24 h, pitch coating, and high temperature carbonization at 800°C for 10 h, to obtain artificial graphite A. Dᵥ50 of the artificial graphite A was 16 µm, Dᵥ90 was 26 µm, Dᵥ10 was 7 µm, the degree of graphitization was 92.5%, the specific surface area was 0.9 m²/g, the powder compacted density was 1.7 g/cm³, and the mass ratio of the coating layer in the artificial graphite A to the artificial graphite A was 3%.

Artificial graphite B: The coke raw material was first pretreated to remove impurities, pyrolysis and granulation were performed to obtain primary particles with Dᵥ50 of 14 µm, and the primary particles were subjected to graphitization treatment at 2800°C for 20 h to obtain artificial graphite B.

Artificial graphite C: The coke raw material was first pretreated to remove impurities, pyrolysis and granulation were performed to obtain secondary particles with Dᵥ50 of 10 µm, and the secondary particles were subjected to graphitization treatment at 3000°C for 24 h, pitch coating, and high temperature carbonization at 1000°C for 15 h. Dᵥ50 of the artificial graphite C was 12 µm, Dᵥ90 was 20 µm, Dᵥ10 was 6.5 µm, the degree of graphitization was 91.8%, the specific surface area was 0.86 m²/g, the powder compacted density was 1. 6 g/cm³, and the mass ratio of the coating layer in the artificial graphite C to the artificial graphite C was 5%.

### <Preparation of negative electrode plate>

Preparation of first negative electrode slurry: The artificial graphite A and the artificial graphite B were mixed at the mass ratio of 1:9 to obtain the first negative electrode active material (the mass percentage of the artificial graphite A was 10%); the first negative electrode active material, a conductive agent conductive carbon black, carboxymethyl cellulose (CMC), and a binder SBR were mixed at a mass ratio of 96.8:0.8:1.2:1.2, to which a solvent deionized water was added, and the resulting solution was stirred by using a vacuum mixer until the system was uniform, to obtain a first negative electrode slurry with a solid percentage of 66wt%. Dᵥ50 of the first negative electrode active material was 15 µm, Dᵥ90 was 25 µm, Dᵥ10 was 5.7 µm, the degree of graphitization was 94%, the specific surface area was 1.2 m²/g, and the powder compacted density was 1.7 g/cm³.

Preparation of second negative electrode slurry: The second negative electrode active material artificial graphite C, a conductive agent conductive carbon black, carboxymethyl cellulose (CMC), and a binder SBR were mixed at a mass ratio of 96.8:0.8:1.1:1.3, to which a solvent deionized water was added, and the resulting solution was stirred by using a vacuum mixer until the system was uniform, to obtain a second negative electrode slurry with a solid percentage of 66wt%. Dᵥ50 of the second negative electrode active material was 12 µm, Dᵥ90 was 20 µm, Dᵥ10 was 6.5 µm, the degree of graphitization was 91.8%, the specific surface area was 0.86 m²/g, and the powder compacted density was 1.6 g/cm³.

The first negative electrode slurry was applied on one surface of the negative electrode current collector copper foil with a thickness of 8 µm, and a negative electrode current collector containing the first negative electrode material layer was obtained after drying; and then the second negative electrode slurry was applied on the first negative electrode material layer, and a negative electrode current collector containing the first negative electrode material layer and the second negative electrode material layer was obtained after drying at 110°C. The preceding steps were also performed on the other surface of the negative current collector. A negative electrode plate including a first negative electrode active material layer with a thickness of 54 µm and a second negative electrode active material layer with a thickness of 81 µm was obtained after cold pressing, and then subjected to processes such as tab forming and cutting to obtain a negative electrode plate. A mass ratio of the first negative electrode material layer to the second negative electrode material layer was 2:3, the compacted density of the first negative electrode material layer was 1.7 g/cm³, the compacted density of the second negative electrode material layer was 1.6 g/cm³, and the compacted density of the negative electrode plate was 1.65 g/cm³.

### <Preparation of liquid electrolyte>

In an environment with a water content of less than 10 ppm, non-aqueous organic solvents ethylene carbonate, ethyl methyl carbonate, and diethyl carbonate were mixed at a volume ratio of 1:1:1 to obtain an electrolyte solvent, and then a lithium salt LiPF₆ was dissolved in the mixed solvent to prepare a liquid electrolyte with a lithium salt concentration of 1 mol/L.

### <Preparation of separator>

A polyethylene film was selected as the separator, which was cut in an appropriate size according to the sizes of the positive electrode plate and the negative electrode plate before use.

### <Preparation of lithium-ion battery>

The positive electrode plate, the separator, and the negative electrode plate were stack in order, so that the separator was disposed between the positive electrode plate and negative electrode plate to provide separation. Then the stack was wound to obtain an electrode assembly. The electrode assembly was placed in an outer package and dried, and the liquid electrolyte was then injected. After vacuum packaging, standing, formation, shaping, and other processes, a lithium-ion battery was obtained.

Examples 1-2 to 1-4 were the same as Example 1-1 except that the mass percentages of the artificial graphite A and the artificial graphite B were adjusted as shown in Table 1.

Examples 2-1 to 2-4 were the same as Example 2-1 except that Dᵥ50 of the first negative electrode active material, Dᵥ50 of the artificial graphite A, and Dᵥ50 of the artificial graphite B were adjusted as shown in Table 2.

Examples 3-1 to 3-4 were the same as Example 3-1 except that the degree of graphitization of the first negative electrode active material, the degree of graphitization of the artificial graphite A, and the degree of graphitization of the artificial graphite B were adjusted as shown in Table 3.

Examples 4-1 to 4-4 were the same as Example 4-1 except that the degree of graphitization of the first negative electrode active material, the degree of graphitization of the artificial graphite A, and the degree of graphitization of the artificial graphite B were adjusted as shown in Table 4.

Examples 5-1 to 5-4 were the same as Example 5-1 except that the degree of graphitization of the first negative electrode active material, the degree of graphitization of the artificial graphite A, and the degree of graphitization of the artificial graphite B were adjusted as shown in Table 5.

Examples 6-1 to 6-4 were the same as Example 6-1 except that the ratio of Dᵥ50 of the second negative electrode active material to Dᵥ50 of the first negative electrode active material, Dᵥ50 of the first negative electrode active material, and Dᵥ50 of the second negative electrode active material were adjusted as shown in Table 6.

Examples 7-1 to 7-4 were the same as Example 1-1 except that the ratio of the degree of graphitization of the second negative electrode active material to the degree of graphitization of the first negative electrode active material, the degree of graphitization of the first negative electrode active material, and the degree of graphitization of the second negative electrode active material were adjusted as shown in Table 7.

Examples 8-1 to 8-4 were the same as Example 1-1 except that the values of X and Y were adjusted as shown in Table 8.

Comparative Examples 1-1 and 1-2 were the same as Example 1-1 except that the mass percentages of the artificial graphite A and the artificial graphite B were adjusted as shown in Table 1.

Comparative Examples 2-1 and 2-2 were the same as Example 2-1 except that Dᵥ50 of the first negative electrode active material, Dᵥ50 of the artificial graphite A, and Dᵥ50 of the artificial graphite B were adjusted as shown in Table 2.

Comparative Examples 3-1 and 3-2 were the same as Example 3-1 except that the degree of graphitization of the first negative electrode active material, the degree of graphitization of the artificial graphite A, and the degree of graphitization of the artificial graphite B were adjusted as shown in Table 3.

Comparative Examples 4-1 and 4-2 were the same as Example 4-1 except that the degree of graphitization of the first negative electrode active material, the degree of graphitization of the artificial graphite A, and the degree of graphitization of the artificial graphite B were adjusted as shown in Table 4.

Comparative Examples 5-1 and 5-2 were the same as Example 5-1 except that the degree of graphitization of the first negative electrode active material, the degree of graphitization of the artificial graphite A, and the degree of graphitization of the artificial graphite B were adjusted as shown in Table 5.

Comparative Examples 6-1 and 6-2 were the same as Example 6-1 except that the ratio of Dᵥ50 of the second negative electrode active material to Dᵥ50 of the first negative electrode active material, Dᵥ50 of the first negative electrode active material, and Dᵥ50 of the second negative electrode active material were adjusted as shown in Table 6.

Comparative Examples 7-1 and 7-2 were the same as Example 7-4 except that the ratio of the degree of graphitization of the second negative electrode active material to the degree of graphitization of the first negative electrode active material, the degree of graphitization of the first negative electrode active material, and the degree of graphitization of the second negative electrode active material were adjusted as shown in Table 7.

Comparative Examples 8-1 and 8-2 were the same as Example 1-1 except that the values of X and Y were adjusted as shown in Table 8.

The lithium-ion batteries prepared in the preceding examples and comparative examples were subjected to the following performance tests. The preparation parameters and performance data of examples are shown in Tables 1-8.

### Charging capability test:

At 25°C, the lithium-ion batteries prepared in the examples and comparative examples were fully charged at nC (for example, n=0.1, 0.2, 0.3, 0.4, or 0.5) and fully discharged at 1C for 10 cycles, and then the lithium-ion batteries were fully charged at 1C. The negative electrode plates were disassembled to observe the lithium precipitation on the surface of the negative electrode plates. If there was no lithium precipitation, the negative electrode plates were fully charged at (n+0.1)C, and test was performed again at such increased rate until lithium was precipitated on the surface of the negative electrode. The maximum charging capacities of the lithium-ion batteries were subtracting 0.1C from the rate in this case.

### Energy density (W) Test:

At 25°C, the lithium-ion batteries were fully charged at a rate of 0.33C and fully discharged at 0.33C for 3 cycles. The discharge energies (E) of the last cycle were taken, the masses (m) of the lithium-ion batteries were weighed using an electronic balance, and W=E/m.

### Storage life test:

The batteries were fully charged to 97% state of charge (SOC), stored at 60°C until the capacities attenuated to 80%, and the storage times at this time were recorded. The target storage time was 280 days. Ratios of storage times in the examples and comparative examples to the target storage time were calculated and recorded as storage life. The target storage life was 100%.

### Cycling performance test:

At 25°C, the lithium-ion batteries prepared in the examples and comparative examples were charged at a rate of 3C and discharged at a rate of 1C for 3%-97%SOC cycle testing, until capacities of the lithium-ion batteries were less than 80% of their initial capacities. The cycle numbers were recorded. The target cycle number was 2000. Ratios of cycling times in the examples and comparative examples to the target cycling time were calculated and recorded as cycling performance. The target cycle life was 100%.

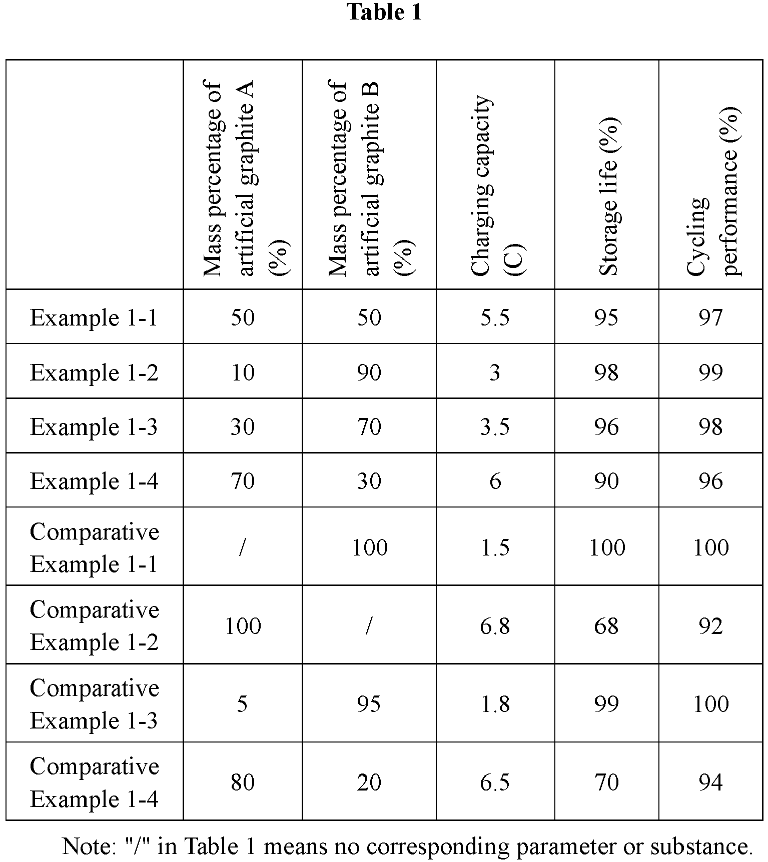

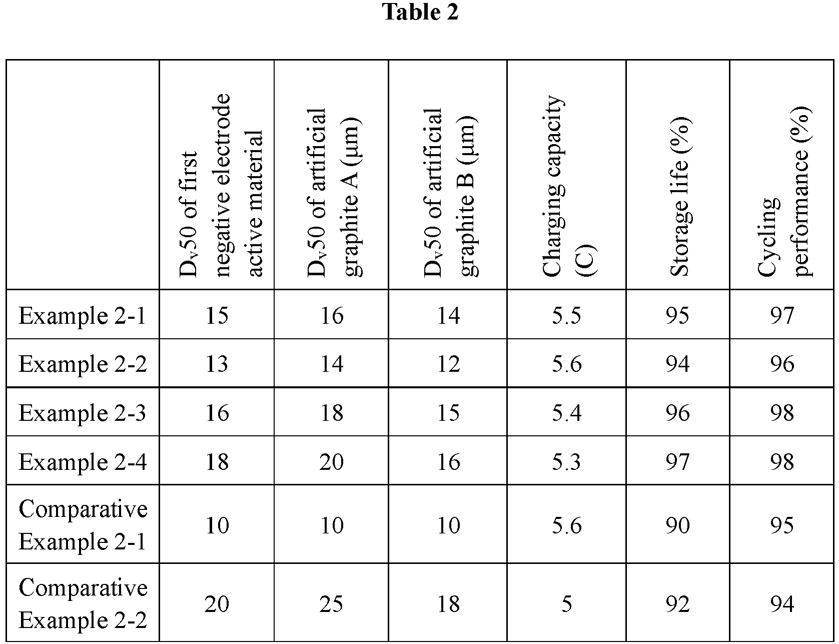

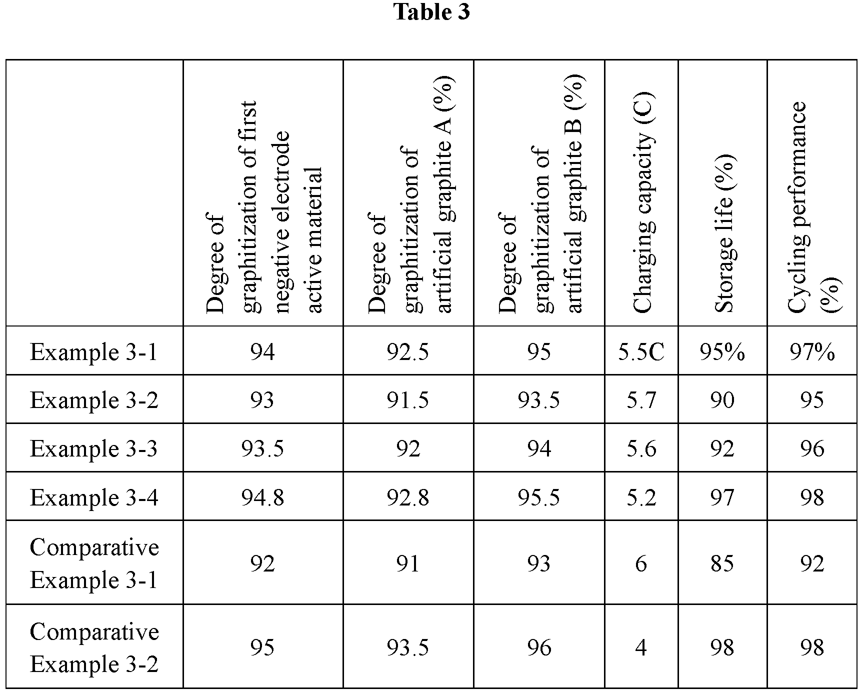

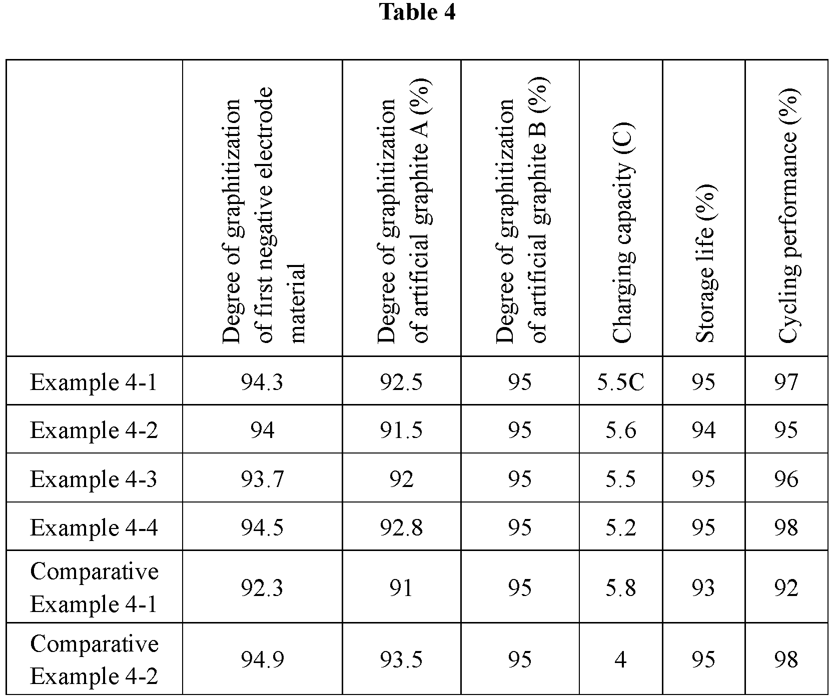

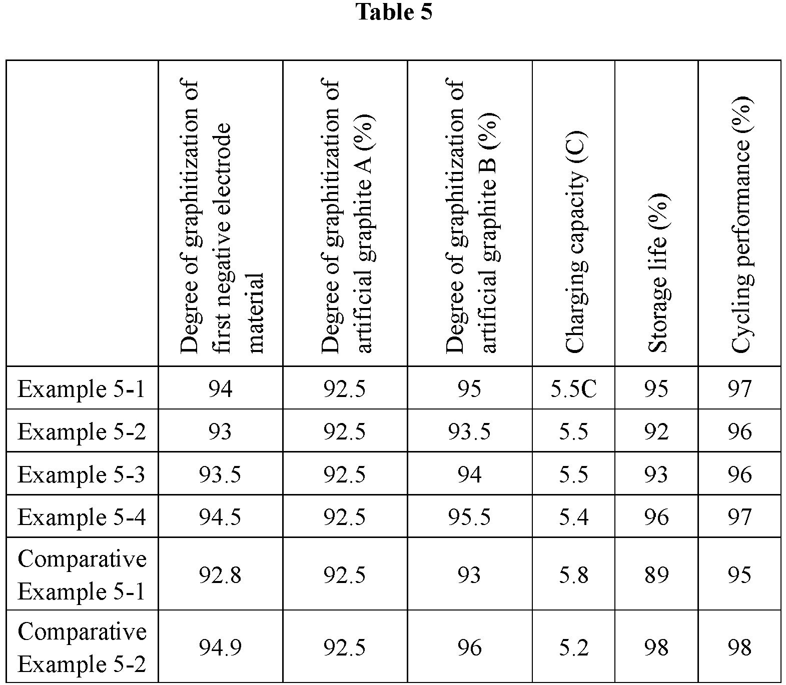

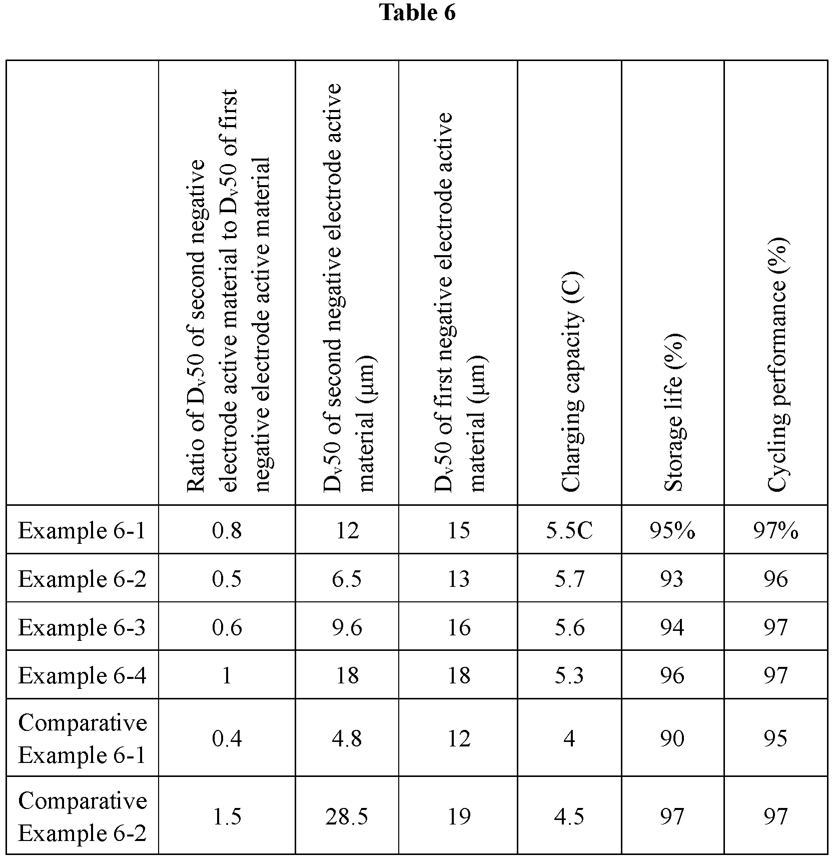

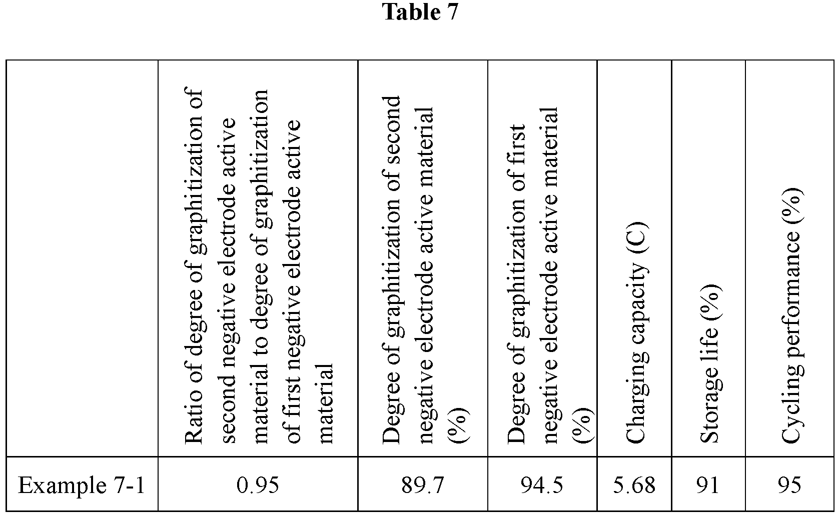

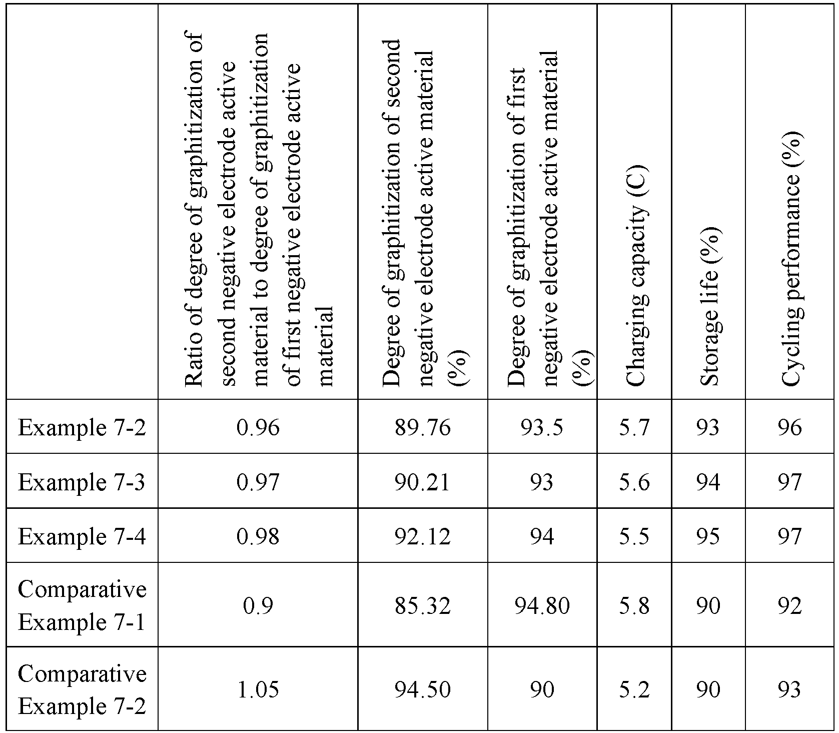

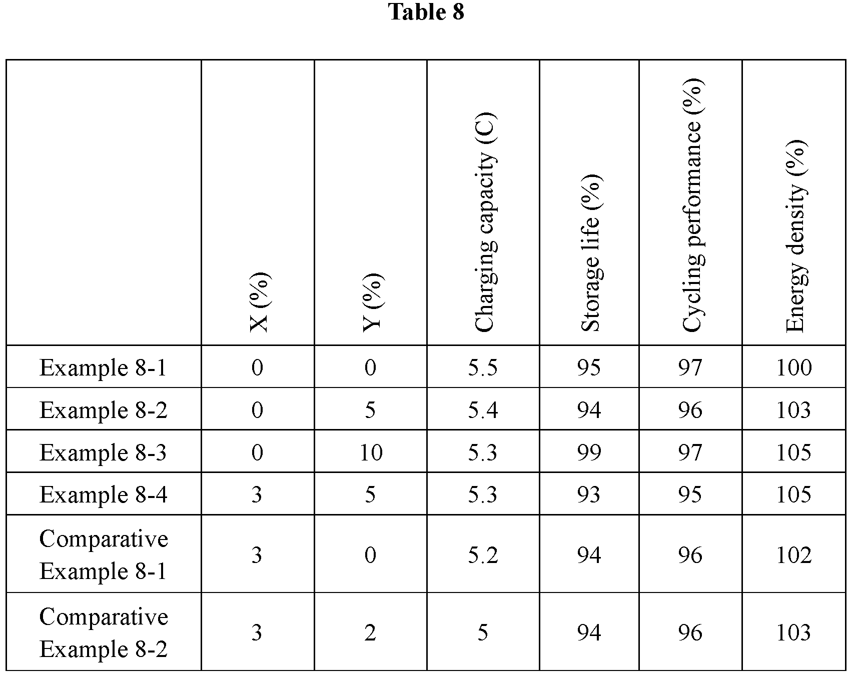

Referring to Table 1, it can be seen from Examples 1-1 to 1-4 and Comparative Examples 1-1 and 1-2 that when a negative electrode plate of a lithium-ion battery includes a first negative electrode material layer and a second negative electrode material layer, the first negative electrode material layer includes both artificial graphite A and artificial graphite B, and the second negative electrode material layer includes artificial graphite C, lithium-ion batteries obtained by utilizing high kinetics of the artificial graphite A and the artificial graphite C and high storage performance of the artificial graphite C have longer storage life and higher charging rate, that is, have good comprehensive performance.

It can be seen from Examples 1-1 to 1-4 and Comparative Examples 1-3 and 1-4 that when the mass percentage of the artificial graphite A is out of the range of this application, it is difficult to satisfy both the storage life and the rate performance of lithium-ion batteries, and the comprehensive performance thereof is inferior to that of the lithium-ion batteries obtained in the examples. When the mass percentage of the artificial graphite A is within the range of this application, the obtained lithium-ion batteries have better comprehensive performance.

Referring to Table 2, it can be seen from Examples 2-1 to 2-4 and Comparative Examples 2-1 and 2-2 that when Dᵥ50 of the first negative electrode active material is within the range of this application, the obtained lithium-ion batteries have better comprehensive performance.

Referring to Table 3, it can be seen from Examples 3-1 to 3-4 and Comparative Examples 3-1 and 3-2 that when the degree of graphitization of the first negative electrode active material is too low, although the rate performance of lithium-ion batteries is slightly improved, the storage life decreases; and when the degree of graphitization of the first negative electrode active material is too high, the rate performance of the lithium-ion batteries is affected. When the degree of graphitization of the first negative electrode active material is within the range of this application, it is beneficial to balance the rate performance and storage life of the lithium-ion batteries, and the obtained lithium-ion batteries have better comprehensive performance.

Referring to Table 4 and Table 5, it can be seen from Examples 4-1 to 4-4 and Comparative Examples 4-1 and 4-2 that when the degree of graphitization of artificial graphite B is unchanged and the degree of graphitization of the artificial graphite A is within the range of this application, the obtained lithium-ion batteries have better comprehensive performance. It can be seen from Examples 5-1 to 5-4 and Comparative Examples 5-1 and 5-2 that when the degree of graphitization of artificial graphite A is unchanged and the degree of graphitization of the artificial graphite B is within the range of this application, the obtained lithium-ion batteries have better comprehensive performance. In addition, it can be seen that the degree of graphitization of the artificial graphite A mainly affects the rate performance of the lithium-ion batteries, and the degree of graphitization of the artificial graphite B mainly affects the storage life of the lithium-ion batteries.

Referring to Table 6, it can be seen from Examples 6-1 to 6-4 and Comparative Examples 6-1 and 6-2 that when the ratio of Dᵥ50 of the second negative electrode active material to Dᵥ50 of the first negative electrode active material is too large, the rate performance of the lithium-ion batteries is affected; and when the ratio of Dᵥ50 of the second negative electrode active material to Dᵥ50 of the first negative electrode active material is too small, both the rate performance and storage performance of the lithium-ion batteries are affected. When the ratio of Dᵥ50 of the second negative electrode active material to Dᵥ50 of the first negative electrode active material is within the range of this application, the obtained lithium-ion batteries have better comprehensive performance.

Referring to Table 7, it can be seen from Examples 7-1 to 7-4 and Comparative Examples 7-1 and 7-2 that when the ratio of the degree of graphitization of the second negative electrode active material to the degree of graphitization of the first negative electrode active material is too small, the storage life of the lithium-ion batteries is affected; and when the ratio of the degree of graphitization of the second negative electrode active material to the degree of graphitization of the first negative electrode active material is too large, the rate performance of the lithium-ion batteries is affected. When the ratio of the degree of graphitization of the second negative electrode active material to the degree of graphitization of the first negative electrode active material is within the range of this application, the obtained lithium-ion batteries have better comprehensive performance.

Referring to Table 8, it can be seen from Examples 8-1 to 8-4 and Comparative Examples 8-1 and 8-2 that when the first negative electrode active material and the second negative electrode active material each include the silicon-based material, and the mass percentage of the silicon-based material is within the range of this application, the obtained lithium-ion batteries have good comprehensive performance. It can be seen from Examples 8-1 to 8-4 that when the second negative electrode active material includes the silicon-based material and the first negative electrode active material includes no silicon-based material, it is more beneficial to improve the comprehensive performance of the lithium-ion batteries.

It should be noted that this application is not limited to the foregoing examples. The foregoing embodiments are merely examples, and embodiments having constructions substantially the same as those of the technical idea and having the same effects as the technical idea within the scope of the technical solutions of this application are all included in the technical scope of this application. In addition, within the scope without departing from the essence of this application, various modifications that can be conceived by persons skilled in the art are applied to the embodiments, and other modes constructed by combining some of the constituent elements in the embodiments are also included in the scope of this application.

## Claims

1. A secondary battery, comprising a negative electrode plate, wherein the negative electrode plate comprises a negative electrode current collector, a first negative electrode material layer, and a second negative electrode material layer; and the first negative electrode material layer is located between the negative electrode current collector and the second negative electrode material layer, the first negative electrode material layer comprises a first negative electrode active material, and the second negative electrode material layer comprises a second negative electrode active material; wherein
the first negative electrode active material comprises artificial graphite A and artificial graphite B, the artificial graphite A comprises secondary particles and an amorphous carbon coating layer is provided on a surface of the artificial graphite A, and the artificial graphite B comprises primary particles and no amorphous carbon coating layer is provided on a surface of the artificial graphite B.

2. The secondary battery according to claim 1, wherein the first negative electrode active material satisfies at least one of the following conditions:
(1) a median particle size by volume Dᵥ50 is 13 µm-18 µm, or optionally 15 µm-16 µm;
(2) a particle size distribution satisfies: 1≤(Dᵥ90-Dᵥ10)/Dᵥ50≤1.6, or optionally 1.1≤(Dᵥ90-Dᵥ10)/Dᵥ50≤1.5;
(3) a degree of graphitization is 92.8%-94.8%, or optionally 93.5%-94.5%;
(4) a specific surface area is 1.0 m²/g-1.6 m²/g, or optionally 1.05 m²/g-1.3 m²/g; and
(5) a powder compacted density is 1.6 g/cm³-1.85 g/cm³, or optionally 1.7 g/cm³-1.8 g/cm³.

3. The secondary battery according to claim 1 or 2, wherein the artificial graphite A satisfies at least one of the following conditions:
(1) a median particle size by volume Dᵥ50 is 14 µm-20 µm, or optionally 16 µm-18 µm;
(2) a particle size distribution satisfies: 0.8≤(Dᵥ90-Dᵥ10)/Dᵥ50≤1.7, or optionally 0.9≤(Dᵥ90-Dᵥ10)/Dᵥ50≤1.4;
(3) a degree of graphitization is 91.0%-92.8%, or optionally 91.5%-92.5%;
(4) a specific surface area is 0.8 m²/g-1.1 m²/g, or optionally 0.9 m²/g-1 m²/g;
(5) a powder compacted density is 1.5 g/cm³-1.8 g/cm³, or optionally 1.6 m²/g-1.8 m²/g;
(6) based on a mass of the first negative electrode active material, a mass percentage of the artificial graphite A is 10%-70%, or optionally 30%-50%; and
(7) a mass ratio of the amorphous carbon coating layer in the artificial graphite A to the artificial graphite A is 1%-5%, or optionally 3%-4%.

4. The secondary battery according to any one of claims 1 to 3, wherein the artificial graphite B satisfies at least one of the following conditions:
(1) a median particle size by volume Dᵥ50 is 12 µm-16 µm, or optionally 15 µm-16 µm; and a particle size distribution satisfies 0.5≤(Dᵥ90-Dᵥ10)/Dᵥ50≤1.5, or preferably 0. 7≤(Dᵥ90-Dᵥ10)/Dᵥ50≤1.1;
(2) a degree of graphitization is 93.5%-95.5%, or preferably 94.0%-95.0%;
(3) a specific surface area is 1.1 m²/g-1.6 m²/g, or preferably 1.3 m²/g-1.5 m²/g;
(4) a powder compacted density is 1.6 g/cm³-1.85 g/cm³, or preferably 1.6 g/cm³-1.8 g/cm³; and
(5) based on a mass of the first negative electrode active material, a mass percentage of the artificial graphite B is 30%-90%, or optionally 40%-70%.

5. The secondary battery according to any one of claims 1 to 4, wherein the secondary battery satisfies at least one of the following conditions:
(1) a median particle size by volume Dᵥ50 of the second negative electrode active material is less than or equal to a median particle size by volume Dᵥ50 of the first negative electrode active material; or preferably a ratio of the median particle size by volume Dᵥ50 of the second negative electrode active material to the median particle size by volume Dᵥ50 of the first negative electrode active material is 0.5-1;
(2) a ratio of a particle size distribution (Dᵥ90-Dᵥ10)/Dᵥ50 of the second negative electrode active material to a particle size distribution (Dᵥ90-Dᵥ10)/Dᵥ50 of the first negative electrode active material is 0.8-1.1;
(3) a degree of graphitization of the second negative electrode active material is lower than a degree of graphitization of the first negative electrode active material; or optionally a ratio of the degree of graphitization of the second negative electrode active material to the degree of graphitization of the first negative electrode active material is 0.95-0.99;
(4) a specific surface area of the second negative electrode active material is less than a specific surface area of the first negative electrode active material; or optionally a ratio of the specific surface area of the second negative electrode active material to the specific surface area of the first negative electrode active material is 0.6-0.8; and
(5) a powder compacted density of the second negative electrode active material is less than a powder compacted density of the first negative electrode active material; or optionally a ratio of the powder compacted density of the second negative electrode active material to the powder compacted density of the first negative electrode active material is 0.67-0.95.

6. The secondary battery according to any one of claims 1 to 5, wherein the second negative electrode active material comprises artificial graphite C, the artificial graphite C comprises secondary particles and an amorphous carbon coating layer is provided on a surface of the artificial graphite C, and a mass ratio of the amorphous carbon coating layer in the artificial graphite C to the artificial graphite C is 2%-8%.

7. The secondary battery according to claim 6, wherein the second negative electrode active material comprises the artificial graphite C, and Dᵥ50 of the artificial graphite C is less than Dᵥ50 of the artificial graphite A; or optionally a ratio of Dᵥ50 of the artificial graphite C to Dᵥ50 of the artificial graphite A is 0.5-1.

8. The secondary battery according to claim 6 or 7, wherein the secondary battery satisfies at least one of the following conditions:
(1) a ratio of a degree of graphitization of the artificial graphite C to the degree of graphitization of the artificial graphite A is 0.95-1;
(2) a ratio of a specific surface area of the artificial graphite C to the specific surface area of the artificial graphite A is 0.93-1; and
(3) a ratio of the powder compacted density of the artificial graphite A to a powder compacted density of the artificial graphite C is 1.01-1.3.

9. The secondary battery according to any one of claims 1 to 8, wherein a compacted density of the first negative electrode material layer is greater than a compacted density of the second negative electrode material layer;
the compacted density of the first negative electrode material layer is 1.6 g/cm³-1.8 g/cm³, or optionally 1.6 g/cm³-1.75 g/cm³; and
the compacted density of the second negative electrode material layer is 1.3 g/cm³-1.6 g/cm³, or optionally 1.4 g/cm³-1.6 g/cm³.

10. The secondary battery according to any one of claims 1 to 9, wherein a mass ratio of the first negative electrode material layer to the second negative electrode material layer is 2:3-3:2.

11. The secondary battery according to any one of claims 1 to 10, wherein the first negative electrode active material and the second negative electrode active material each comprise a silicon-based material, and based on the mass of the first negative electrode active material, a mass percentage of the silicon-based material is denoted as X; and based on a mass of the second negative electrode active material, a mass percentage of the silicon-based material is denoted as Y; and
the secondary battery satisfies X<Y;
optionally, X≤5%; or
optionally, Y≤10%.

12. An electric apparatus, comprising the secondary battery according to any one of claims 1 to 11.
